# DEMANDE DE BREVET EUROPEEN

(11) **EP 0 928 042 A1**
(43) Date de publication de la demande: **07.07.1999**
(21) Numéro de dépôt: 98403339.9
(22) Date de dépôt: 30.12.1998
(51) Int. Cl.: H01Q 3/46, G01S 3/16, H01Q 21/00

(54) **Dispositif large bande de détection, notamment de radars**

(30) Priorité: 30.12.1997 FR 9716684
(71) Demandeur: THOMSON-CSF, 75008 Paris (FR)
(72) Inventeur: Chekroun, Claude, 94117 Arcueil Cedex (FR); Garnier, Gérard, 94117 Arcueil Cedex (FR); Herault, Joel, 94117 Arcueil Cedex (FR); Soiron, Michel, 94117 Arcueil Cedex (FR)

(57) **Abrégé**

La présente invention a pour objet un dispositif de détection, notamment de radars ou de systèmes de communication, susceptible d'être embarqué par exemple sur un satellite, qui soit large bande et qui soit en outre de relativement faible coût.

Le dispositif comporte deux antennes (A₁, A₂), formées chacune d'au moins un élément rayonnant et d'un réseau réflecteur à contrôle de phase et effectuant un balayage électronique d'une zone (Z) de l'espace selon un plan. La première antenne (A₁) fournit un faisceau (F₁) allongé selon une première direction (OY) et balaie l'espace selon un plan (XOZ) perpendiculaire à la première direction. La deuxième antenne (A₂) fournit plusieurs faisceaux (F₂₁...F₂ₚ) balayant l'espace selon le même plan (XOZ) en synchronisme avec la première antenne, de sorte que les faisceaux des deux antennes aient une zone de recouvrement (R). Le dispositif comporte en outre des moyens assurant la corrélation des signaux reçus par les deux antennes.

## Description

La présente invention a pour objet un dispositif de détection de systèmes émettant des ondes électromagnétiques, notamment radars ou systèmes de communication, susceptible d'être embarqué par exemple sur un satellite, qui soit large bande et qui soit en outre de relativement faible coût.

Les évolutions actuelles des radars et des systèmes de communication conduisent ceux-ci à émettre des signaux élaborés pour rendre leur détection difficile par des systèmes hostiles par exemple par modulation de fréquence ou de phase, sauts de fréquence ou autres techniques d'étalement de spectre. En effet, le système de détection hostile reçoit alors un signal dont le niveau peut être faible par rapport à celui du bruit et, ne connaissant pas la technique utilisée par l'émetteur, le système de détection ne sera pas à même de retrouver ce signal par le calcul.

La présente invention a pour objet un dispositif de détection qui soit capable de détecter des radars ou des systèmes de communication émettant un signal dont le niveau reçu par le dispositif est faible par rapport au bruit et, ce, avec une résolution suffisante, le dispositif devant être en outre large bande, de faible coût et de préférence embarquable.

A cet effet, le dispositif comporte deux antennes perpendiculaires, formées chacune d'au moins un élément rayonnant et d'un réseau réflecteur à contrôle de phase, le réseau effectuant un balayage électronique d'une zone de l'espace selon un plan ; la première antenne forme un faisceau allongé selon une première direction (OY), qui balaie l'espace selon un plan (XOZ) de préférence sensiblement perpendiculaire à la première direction ; la deuxième antenne forme plusieurs (p) faisceaux allongés selon ledit plan et balayant l'espace selon le même plan (XOZ), en synchronisme avec la première antenne, de sorte que le faisceau de la première antenne ait à tout instant une surface d'intersection avec chacun des faisceaux de la deuxième antenne. Le dispositif comporte en outre des moyens assurant la corrélation des signaux reçus par les deux antennes. Le calcul montre que, dans ces conditions, la répartition du bruit dans les signaux reçus par les deux antennes est tel que l'opération de corrélation permet de s'affranchir en très grande partie de ce bruit. En outre, l'utilisation de réseaux réflecteurs à contrôle de phase pour la réalisation de chacune des antennes permet de réaliser un système large bande, léger, peu coûteux et éventuellement embarquable.

Plus précisément, l'invention a pour objet un dispositif de détection d'un système émettant une onde électromagnétique selon la revendication 1.

D'autres objets, particularités et résultats de l'invention ressortiront de la description suivante, donnée à titre d'exemple et illustrée par les dessins annexés, qui représentent :
- la figure 1, un schéma général d'un mode de fonctionnement du dispositif selon l'invention ;
- la figure 2a, un mode de réalisation pratique du réflecteur à contrôle de phase utilisé dans la première des deux antennes et la figure 2b, un mode de réalisation du réflecteur à contrôle de phase utilisé dans la seconde antenne.

Sur ces différentes figures, les mêmes références se rapportent aux mêmes éléments.

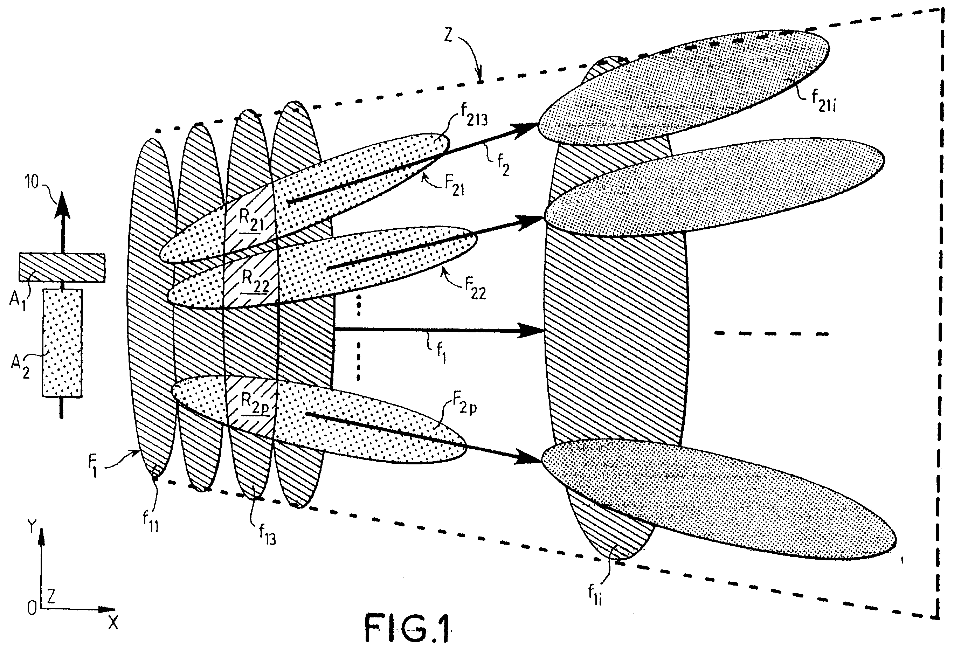

La figure 1 est donc un schéma général du fonctionnement du dispositif selon l'invention.

On a représenté sur la gauche de la figure les deux antennes A₁ et A₂ du dispositif selon l'invention et, sur la droite de cette figure, la trace dans un plan, par exemple au sol, des faisceaux qu'elles émettent.

L'antenne A₁ forme un faisceau noté F₁ dont la trace a une forme allongée selon une direction OY. Ce faisceau F₁ balaie une certaine zone Z selon un plan XOZ, de préférence sensiblement perpendiculaire à la direction OY précédente. On a représenté les traces f₁₁...f₁₃... f₁ᵢ de ce faisceau à différents instants et une flèche f₁ montrant, dans le plan XOY, la direction de balayage.

L'antenne A₂ forme plusieurs faisceaux simultanément, repérés F₂₁, F₂₂...F₂ᵢ ...F₂ₚ. Le nombre p de ces faisceaux est tel que, à tout instant, ils recouvrent sensiblement tout l'espace éclairé par le faisceau F₁. Chacun de ces faisceaux F₂ᵢ est de forme allongée sensiblement selon le plan XOZ et balaie l'espace selon le plan XOZ (flèche f₂ dans le plan XOY). Comme précédemment, on a représenté la trace de chacun des faisceaux F₂ᵢ à plusieurs instants (deux sur la figure), ces traces étant notées f₂₁₃, f₂₁ᵢ pour le faisceau F₂₁.

Comme il a été dit ci-dessus, à un instant donné chacun des faisceaux F₂ᵢ a une surface d'intersection avec le faisceau F₁ ; ces surfaces d'intersection sont représentées à titre d'exemple sur la figure pour la trace f₁₃ du faisceau F₁ et sont notées R₂₁, R₂₂...R₂ₚ.

Le dispositif de détection selon l'invention comporte des moyens assurant la corrélation des signaux reçus par les deux antennes A₁ et A₂ (non représentés sur la figure). Ainsi qu'il est connu (voir article intitulé 〈〈 Detection of spread-spectrum signals using the time-domain filtered cross spectral density 〉〉 de A.W. HOUGHTON et C.D. REEVE paru dans I.E.E. Proc.-Radar, Sonar Navig., Vol. 142, N° 6, December 1995), en présence d'un système à détecter, radar par exemple, dans l'une des surfaces d'intersection, par exemple R₂₂, la corrélation des signaux fournis par les deux antennes permet d'obtenir un pic de corrélation correspondant au signal émis par le système à détecter, pic qui est identifiable du fait que le bruit, lui, ne donne pas naissance à des pics de corrélation. Cela est vrai à condition que les antennes soient suffisamment découplées entre elles, ce qui s'obtient en jouant notamment sur la distance entre antennes et sur la directivité des faisceaux émis. On extrait ensuite le pic de corrélation, par exemple par filtrage temporel, pour améliorer encore le rapport signal/bruit.

La présence d'un tel pic de corrélation permet donc d'identifier la présence d'un système émetteur dans la surface R₂₂. On voit que le fait d'organiser les faisceaux et leur balayage de l'espace de sorte à obtenir des surfaces d'intersection de taille limitée (intersection de deux faisceaux allongés, sensiblement, orthogonaux) permet d'améliorer la précision de la localisation du système émetteur à détecter, ainsi que la sensibilité du dispositif de détection selon l'invention. Il apparaît également que la résolution du dispositif selon l'invention dépend de la taille des surfaces d'intersection R : plus elles sont petites, c'est-à-dire plus étroit est le faisceau F₁ et plus nombreux sont les faisceaux F₂ᵢ, meilleure est la résolution. La résolution est un des paramètres du compromis qui doit être réalisé, les autres paramètres étant la rapidité du balayage de la zone Z, qui conduit à choisir un faisceau F₁ large et des faisceaux F₂ᵢ larges ou nombreux, l'encombrement et le poids (notamment pour permettre au dispositif d'être embarquable), qui conduisent à choisir des faisceaux larges pour pouvoir réduire la taille de l'antenne, ainsi que le coût, qui conduit bien entendu à simplifier les structures. Dans le dispositif selon l'invention, on a choisi d'émettre des faisceaux de forme allongée selon deux plans sensiblement orthogonaux, de sorte à réduire à la fois les dimensions des antennes selon une direction et l'étendue des surfaces d'interaction R ; par ailleurs, un bon compromis pour le nombre de faisceaux est p = 5. Enfin, il est toujours possible d'améliorer la localisation du système détecté par les procédés connus tels que écartométrie de phase ou d'amplitude ou formation de faisceaux par le calcul.

Les deux antennes A₁ et A₂ sont donc sensiblement rectangulaires et ont été représentées sur la figure 1 comme disposées sensiblement perpendiculairement l'une à l'autre et à proximité l'une de l'autre. Cette orthogonalité n'est pas nécessaire : il suffit que les faisceaux F₁ et F₂ aient des surfaces d'intersection ; en outre, les deux antennes pourraient être disposées de sorte à être superposées en croix.

Lorsque le dispositif selon l'invention est embarqué, les antennes A₁ et A₂ sont disposées de telle sorte qu'elles se déplacent selon une direction sensiblement paralléle à OY (flèche 10). De la sorte, la zone de balayage Z se déplace également selon la direction OY ; cette disposition permet l'observation d'un système à détecter sur une durée plus longue. Si le dispositif est embarqué sur satellite, on peut ainsi assurer une surveillance de tout l'espace situé sous le satellite, au sol et dans les airs, au fur et à mesure de l'avance de celui-ci.

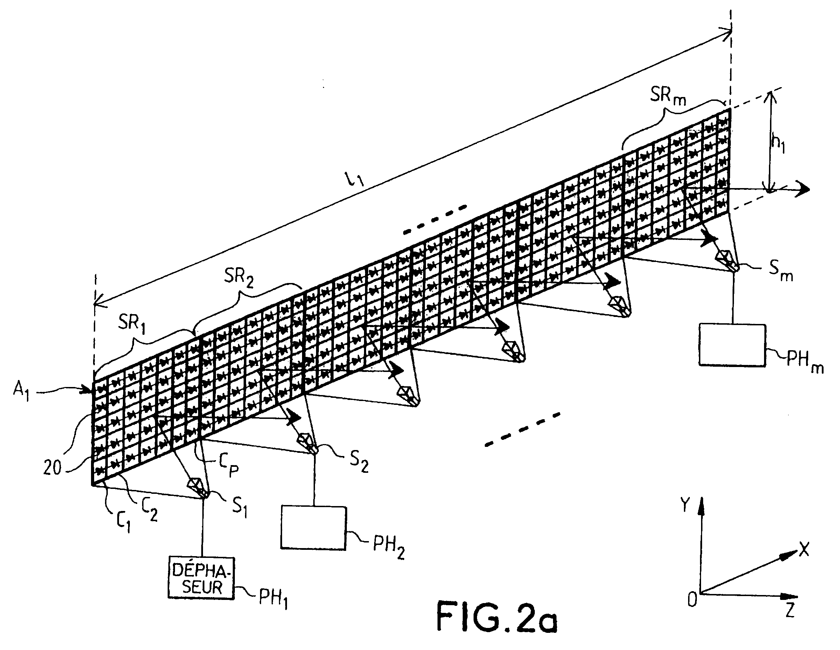

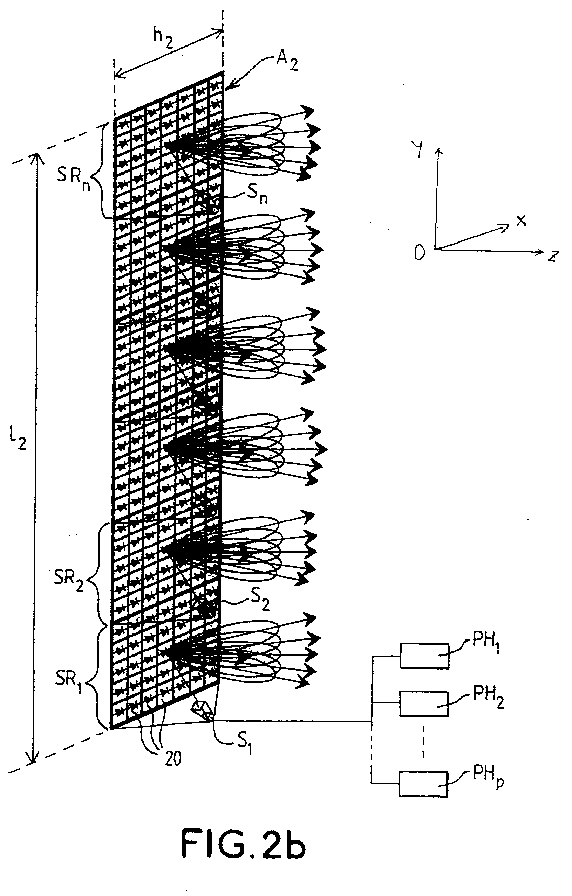

Les figures 2a et 2b représentent un mode de réalisation respectivement des antennes A₁ et A₂ de la figure précédente.

L'antenne A₁ est donc un réseau réflecteur à déphaseurs commandables électroniquement, connu sous le nom de 〈〈 reflect array 〉〉 dans la littérature anglo-saxonne, qui s'étend dans le plan XOY et qui comporte un réseau d'éléments à contrôle de phase, ou réseau phasé, disposé devant des moyens réflecteurs, constitués par exemple par un plan métallique formant plan de masse.

Le réseau réflecteur phasé peut être réalisé de toutes façons connues. Il est constitué par exemple par un ensemble d'éléments rayonnants destinés à recevoir puis réémettre une onde hyperfréquence incidente, reliés à des moyens de déphasage électroniques qui permettent de conférer au signal à réémettre un déphasage commandable, ce qui permet à son tour de réaliser un balayage électronique de l'espace, de façon connue. A titre d'exemple, une antenne à réseau réflecteur phasé est décrite dans la demande de brevet français n° 91-16376. Ce réseau réflecteur phasé peut être constitué également par un ensemble de cellules élémentaires réalisant la réflexion et le déphasage (variable sur commande électronique) de l'onde hyperfréquence qu'elle reçoit. De tels réseaux phasés peuvent utiliser des technologies du type circuit imprimé, aussi bien pour les éléments rayonnants que pour les cellules déphaseuses, ce qui permet d'inclure aisément les circuits de commande dans le dispositif, conduisant ainsi à des structures relativementᵣ peu onéreuses, peu encombrantes et légères.

Sur la figure 2a seul est visible le réseau d'éléments, repérés 20, à contrôle de phase, comportant M₁ éléments selon la direction OX (sa plus grande dimension ℓ₁) sur N₁ éléments selon la direction OY (de longueur h₁). Chacun des éléments de déphasage 20 peut faire varier la phase de l'onde reçue selon de préférence deux ou quatre valeurs prédéfinies (codées sur 1 ou 2 bits, respectivement), la limitation du nombre de bits de déphasage permettant à une telle structure d'avoir une large bande de fréquences de fonctionnement. Les M₁ x N₁ éléments sont de préférence regroupés en m sous-réseaux, notés SR : SR₁, SR₂... SRₘ. Chacun des sous-réseaux SR est susceptible d'être éclairé par un élément rayonnant S (S₁, S₂...Sₘ), par exemple du type cornet, qui reçoit l'onde hyperfréquence réfléchie par le sous-réseau correspondant.

Chacun des sous-réseaux balaie une portion d'espace selon le plan XOZ selon la commande électronique appliquée à chacun des éléments de déphasage 20 qui le composent. En outre, chacun des éléments rayonnants S₁...ₘ est relié à un déphaseur PH₁...ₘ, les phases imposée par ces éléments PH étant telles qu'elles compensent le décalage des centres de phase de chacun des sous-réseaux SR : cela permet d'obtenir un faisceau unique F₁ tel que représenté sur la figure 1. A cet effet, les déphaseurs PH sont plus précis que les éléments de déphasage 20 du réseau réflecteur, typiquement de 4 à 6 bits. Ils sont constitués par exemple par des déphaseurs à ferrite.

La figure 2b représente de façon analogue l'antenne A₂. Celle-ci s'étend dans le plan XOY également, sa plus grande dimension étant selon la direction OY (ℓ₂). De façon analogue à l'antenne A₁, l'antenne A₂ est formée d'un réseau de M₂ (selon la dimension ℓ₂) sur N₂ (selon la dimension h₂, parallèlement à OX) éléments à contrôle de phase 20, placé devant un réflecteur non représenté. Les éléments de déphasage sont également organisés en sous-réseaux, repérés SR₁...SRₙ. Les n sous-réseaux SR de la figure 2b peuvent ou peuvent ne pas être en même nombre, peuvent ou peuvent ne pas comporter le même nombre d'éléments de déphasage 20 que ceux de la figure 2a. De même, ces éléments de déphasage peuvent être ou non identiques pour les deux antennes. Comme précédemment également, chacun des sous-réseaux SR est susceptible d'être éclairé par un élément rayonnant S (S₁...Sₙ) qui peut, ou non, être identique à ceux de la figure 2a. Chacun des éléments S est relié à une batterie de p déphaseurs, également repérés PH et qui peuvent ou non être identiques aux déphaseurs PH de l'antenne A₁. Il est toutefois préférable que les deux antennes présentent la même polarisation, pour pouvoir effectuer une intégration cohérente des signaux reçus sur les deux antennes.

En fonctionnement, chacun des sous-réseaux SR de l'antenne A₂ est capable d'avoir un diagramme de rayonnement présentant p lobes simultanés, la direction de chacun des lobes étant définie par la valeur imprimée à la phase par chacun des p déphaseurs PH. La commande en synchronisme des déphaseurs PH de chacun des sous-réseaux permet d'obtenir dans chacune des p directions un seul lobe pour l'antenne A₂ à partir des n sous-réseaux.

Sur les deux figures 2a et 2b, on a représenté des antennes A₁ et A₂ constituées d'éléments de déphasage 20 à deux dimensions (2D), c'est-à-dire répartis selon deux directions OX et OY. Cela n'est pas indispensable et l'antenne A₁ peut être limitée à M₁ éléments selon OX et l'antenne A₂ à M₂ éléments selon OY. L'avantage de réseaux 2D est de permettre de rattraper le fait que le plan d'onde correspondant à l'élément S n'est pas plat mais sphérique, lorsque l'élément S est trop proche du sous-réseau SR : il est ainsi possible de rapprocher les éléments S des réseaux et de diminuer l'encombrement de l'antenne.

Dans une variante de réalisation, on peut utiliser, pour chacun des éléments S, un élément rayonnant du type 〈〈 pillbox 〉〉 qui a la particularité de rayonner une onde cylindrique, et non sphérique comme un cornet. Avec de tels éléments 〈〈 pillbox 〉〉, les antennes A₁ et A₂ pourraient être limitées à une ligne d'éléments 20 sans considération de distance par rapport aux éléments S.

Dans une autre variante de réalisation, il est possible de remplacer les lois de phase de correction des formes d'onde par la conformation des réseaux phasés, ceux-ci n'étant alors plus plans.

Par ailleurs, le découpage de chacune des deux antennes A₁ et A₂ en sous-réseaux SR (m et n sous-réseaux, respectivement) présente différents avantages, notamment de permettre de disposer les éléments rayonnants S plus près des réseaux phasés que si ceux-ci ne comportaient pas de sous-réseaux ; il permet également de faire varier le diagramme des antennes, tant pour diminuer le niveau des lobes secondaires que pour réaliser des fonctions d'antibrouillage, en ajustant les lois de phase de chacun des sous-réseaux.

Dans une variante de réalisation (non représentée) de l'antenne A₂, on peut réaliser les p faisceaux F₂ᵢ non pas physiquement en utilisant les déphaseurs PH₁...PHₚ, mais par calcul sur le signal reçu, en utilisant les techniques connues de FFC (pour Formation de Faisceaux par le Calcul), les déphaseurs PH₁...PHₚ étant alors supprimés.

Dans une autre variante de réalisation (non représentée), les déphaseurs PH des antennes A₁ et A₂ peuvent être disposées non pas du côté des sources S, mais du côté des sous-réseaux SR et commander chacun la phase de l'ensemble d'un sous-réseau.

## Revendications

1. Dispositif de détection d'un système émettant une onde électromagnétique, caractérisé par le fait qu'il comporte :
- une première antenne (A₁), comportant au moins un élément rayonnant (S) et un réseau réflecteur à contrôle de phase, fournissant un faisceau (F₁) allongé selon une première direction (OY) qui balaie l'espace selon un plan (XOZ) sensiblement perpendiculaire à la première direction ;
- une deuxième antenne (A₂), comportant au moins un élément rayonnant (S) et un réseau réflecteur à contrôle de phase, fournissant une pluralité de p faisceaux (F₂ᵢ) allongés selon ledit plan (XOZ), qui balaient l'espace selon ce même plan, le balayage du faisceau de la première antenne et celui des faisceaux de la deuxième antenne étant effectués en synchronisme de sorte que le faisceau de la première antenne ait à tout instant une surface d'intersection (R) avec chacun des faisceaux de la deuxième antenne ;
- des moyens de corrélation des signaux reçus par les deux antennes, fournissant un pic de corrélation en présence d'un système à détecter dans l'une des surfaces d'intersection.

2. Dispositif selon la revendication 1, caractérisé par le fait que chacun des réseaux réflecteur à contrôle de phase est organisé en sous-réseaux (SR), chacun des sous-réseaux étant susceptible d'être éclairé par un élément rayonnant (S) distinct.

3. Dispositif selon la revendication 2, caractérisé par le fait que la première antenne (A₁) comporte un déphaseur (PH) par sous-réseau.

4. Dispositif selon la revendication 2, caractérisé par le fait que la deuxième antenne (A₂) comporte p déphaseurs (PH) par sous-réseau.

5. Dispositif selon l'une des revendications 3 ou 4 , caractérisé par le fait que les déphaseurs (PH) sont reliés chacun à un élément rayonnant (S).

6. Dispositif selon l'une des revendications précédentes, caractérisé par le fait que le réseau réflecteur à contrôle de phase de la première antenne comporte une pluralité d'éléments de déphasage (20), chacun de ces éléments étant susceptible d'imprimer un déphasage codé sur 1 ou 2 bits.

7. Dispositif selon l'une des revendications précédentes, caractérisé par le fait que le réseau réflecteur à contrôle de phase de la deuxième antenne comporte une pluralité d'éléments de déphasage (20), chacun de ces éléments étant susceptible d'imprimer un déphasage codé sur 1 ou 2 bits.

8. Dispositif selon l'une des revendications 3 ou 4 , caractérisé par le fait que les déphaseurs (PH) sont susceptibles d'imprimer un déphasage codé sur 4, 5 ou 6 bits.

9. Dispositif selon la revendication 6, caractérisé par le fait que les éléments de déphasage (20) du réseau réflecteur à contrôle de phase de la première antenne sont disposés selon un plan.

10. Dispositif selon la revendication 7, caractérisé par le fait que les éléments de déphasage (20) du réseau réflecteur à contrôle de phase de la deuxième antenne sont disposés selon un plan.
